# EUROPÄISCHE PATENTSCHRIFT

(11) **EP 1 029 811 B1**
(45) Veröffentlichungstag und Bekanntmachung des Hinweises auf die Patenterteilung: **07.05.2003**
(21) Anmeldenummer: 00101560.1
(22) Anmeldetag: 27.01.2000
(51) Int. Cl.: B65G 1/04, B65G 1/06

(54) **Transporteinrichtung, insbesondere innerbetriebliche Transporteinrichtung mit mehreren F-rderbahnen**
Conveying system, in particular for use within a plant comprising a plurality of conveyors
Dispositif de transport plus particulièrement destiné à être utilisé dans une enceinte et comportant une pluralité de bandes transporteuses

(30) Priorität: 15.02.1999 AT 21499
(43) Veröffentlichungstag der Anmeldung: 23.08.2000
(73) Patentinhaber: LTW Lagertechnik GmbH, 6961 Wolfurt (AT)
(72) Erfinder: Malin, Peter, 6900 Bregenz (AT)
(74) Vertreter: Torggler, Paul Norbert, Dr.

(56) Entgegenhaltungen:
- DE-A- 4 342 243
- DE-U- 29 701 565

## Beschreibung

Die Erfindung bezieht sich auf eine Transporteinrichtung, insbesondere innerbetriebliche Transporteinrichtung mit mehreren Förderbahnen, beispielsweise in der Form von Rollenbahnen oder Kettenförderern, die mindestens eine Unterbrechung aufweisen, die die jeweilige Förderbahn in zwei Bahnabschnitte trennt und die beispielsweise die Durchfahrt eines Transportwagens gestatten.

Aus der DE 43 42 243 A1 ist eine derartige Transporteinrichtung mit einem Transportwagen, der eine Übergabevorrichtung aufweist, bekannt.

Aufgabe der Erfindung ist es, die Transportkapazität einer Transporteinrichtung der eingangs genannten Art zu erhöhen.

Die erfindungsgemäße Aufgabe wird dadurch gelöst, daß bei mindestens einer Förderbahn vorzugsweise bei allen Förderbahnen eine stationäre Übergabevorrichtung vorgesehen ist, die wahlweise den Warentransport von einem Bahnabschnitt einer Förderbahn zum zweiten Bahnabschnitt dieser Förderbahn ermöglicht.

Durch die stationäre Übergabevorrichtung wird ein Abstand zwischen den Bahnabschnitten einer Förderbahn überbrückt, der die Durchfahrt eines zusätzlichen Transportwagens ermöglicht.

Vorzugsweise ist vorgesehen, daß die Übergabevorrichtung einen horizontalen Verschiebeteil umfaßt, der als Ausleger ausgebildet ist.

Nachfolgend werden verschiedene Ausführungsbeispiele der Erfindung an Hand der Figuren der beiliegenden Zeichnungen beschrieben. Es zeigen:
Die Fig. 1 schematisch einen Grundriß eines Lagers mit einer erfindungsgemäßen Transporteinrichtung,
die Fig. 2 einen Ausschnitt der Transporteinrichtung im Grundriß,
die Fig. 3a-3g schematisch und im Aufriß die Förderbahnen und die Übergabevorrichtung,
die Fig. 4a-4f schematische Darstellungen der Transportwege,
die Fig. 5a und 5b je einen Aufriß der Übergabevorrichtung,
die Fig. 6-8 schematisch und im Aufriß weitere Ausführungsbeispiele der Übergabevorrichtung und
die Fig. 9 ein schematisch gehaltenes Schaubild eines weiteren Ausführungsbeispiel einer erfindungsgemäßen Übergabevorrichtung.

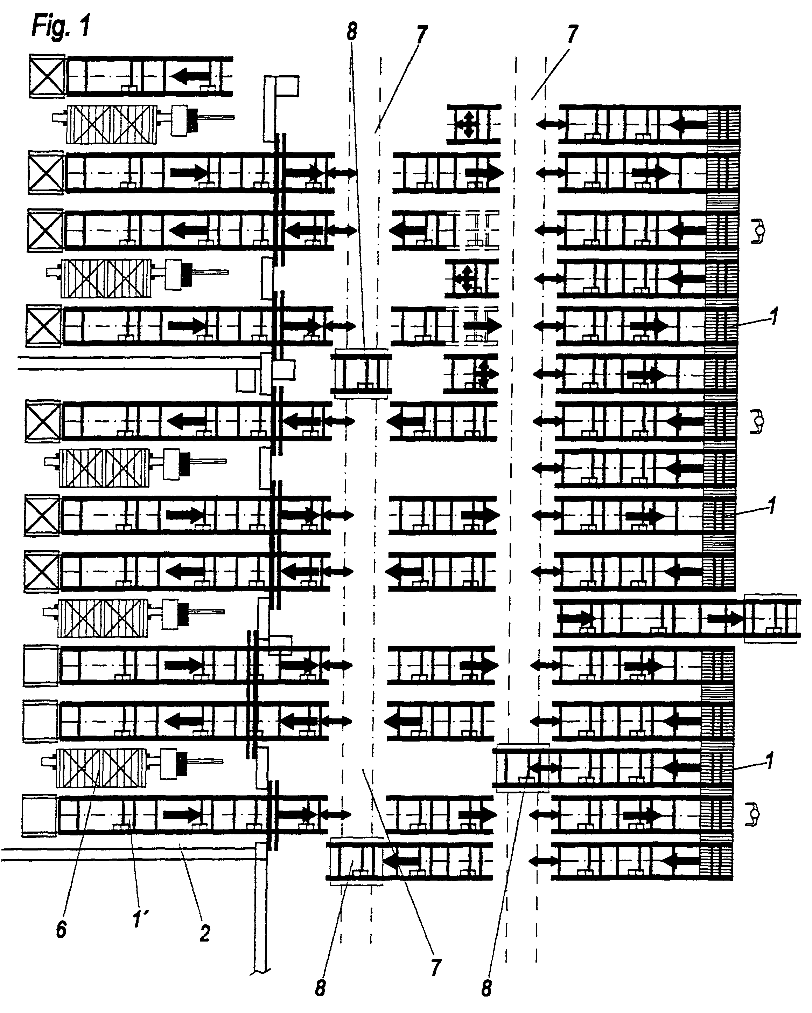

Die Fig. 1 zeigt die Übergabestelle eines Hochregallagers mit Förderbahnen 1, die als Rollenbahnen ausgebildet sind und mit denen die vorzugsweise auf Paletten 3 angeordnete

Ware 4 zur Übergabestelle transportiert werden. Die Ware wird beispielsweise von Regalbediengeräten 6 aus einem Hochregal entnommen und auf die lagerseitigen Bahnabschnitte 1' der Förderbahnen 1 abgesetzt.

Die Förderbahnen 1 werden durch zwei Verkehrswege 7 durchbrochen, in denen Transportwägen 8 quer zu den Förderbahnen 1 verfahrbar sind.

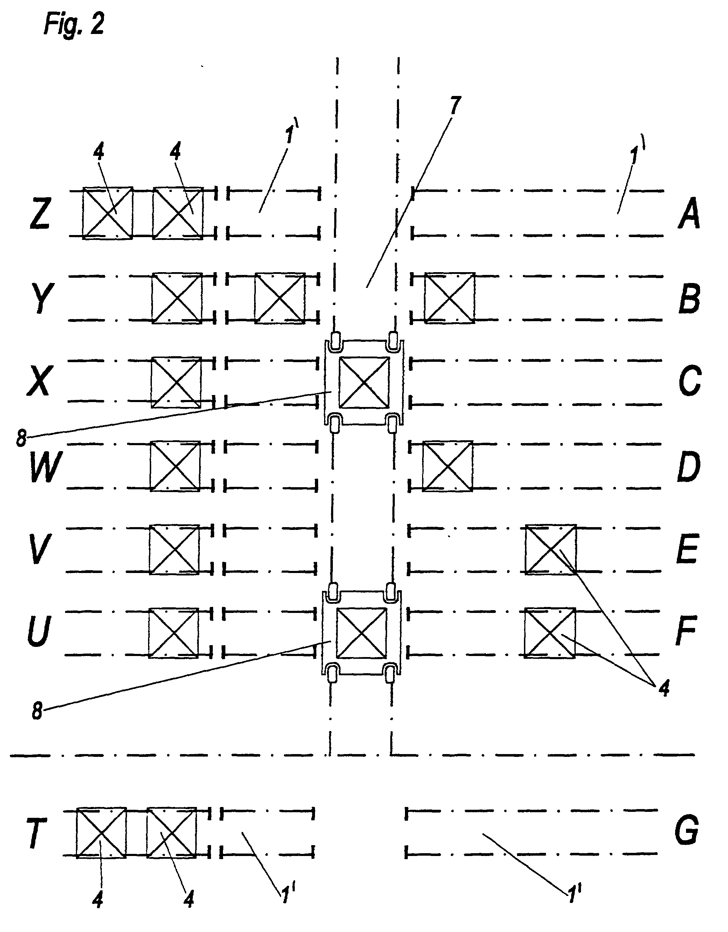

Die Fig. 2 zeigt einen Ausschnitt der Fig. 1. Es handelt sich hier um eine typische Anordnung für den Palettentransport mittels der Förderbahnen 1.

Die auf den Paletten 3 abgesetzte Ware 4 wird von der linken Seite, d.h. von den Bahnabschnitten ZYXWVUT auf die rechte Seite zu den Bahnabschnitten ABCDEFG der Förderbahnen 1 transportiert. Dies kann beispielsweise über einen Transportwagen 8 erfolgen, was bei geringen Spielleistungen sinnvoll ist. Es kann jeweils pro Transportwagen 8 nur eine Palette 3 von der linken ZYXWVUT-Seite auf die rechte ABCDEFG-Seite gefördert werden, wodurch sich die geringe Spielleistung ergibt.

Mit der erfindungsgemäßen Transporteinrichtung kann die Ware 4 direkt von dem Z-Abschnitt zum A-Abschnitt einer Förderbahn 1, vom Y-Abschnitt zum B-Abschnitt und vom X-Abschnitt zum C-Abschnitt einer Förderbahn 1 gefördert werden, wobei der Transportfluß nur dann kurzzeitig unterbrochen werden muß, wenn die Durchfahrt eines Transportwagens 8 zwischen dem linken Bahnabschnitt, beispielsweise U oder X, und dem rechten Bahnabschnitt, beispielsweise F oder C, dies notwendig macht.

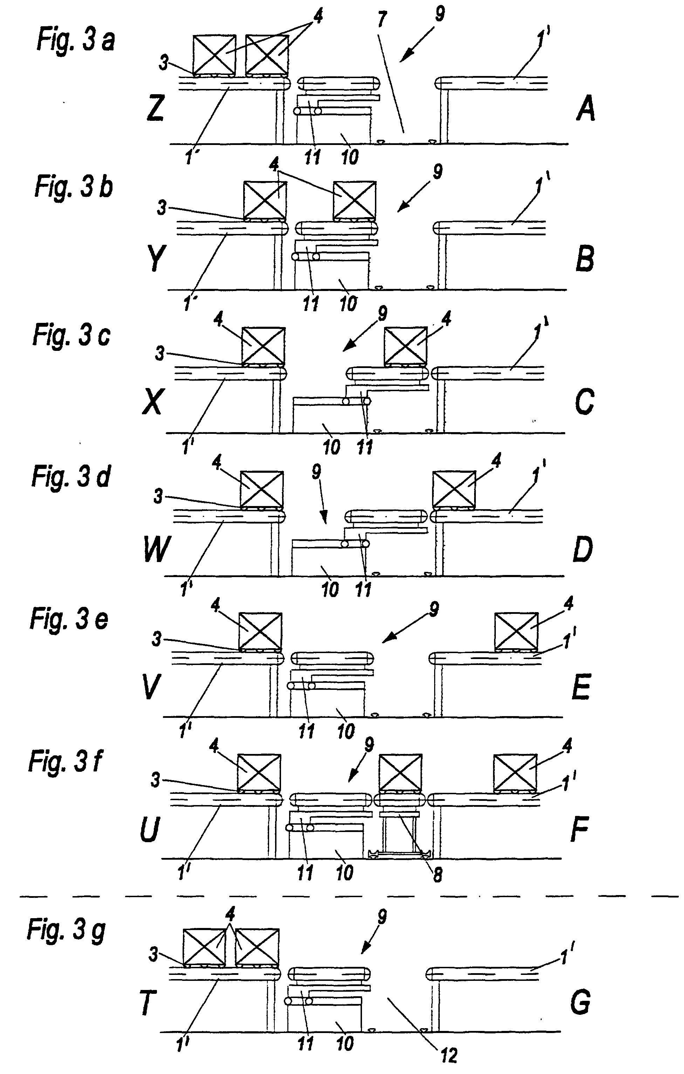

Die erfindungsgemäße Übergabeeinrichtung 9 besteht im Ausführungsbeispiel nach den Fig. 3a-3f aus einer Stützkonstruktion 10, auf der ein Verschiebeteil 11 verfahrbar ist. Der Verschiebeteil 11 überbrückt den Verkehrsweg 7 oder einen eventuellen Arbeitsplatz 12 und verbindet die Bahnabschnitte 1' einer jeweiligen Förderbahn 1.

Auf dem Verschiebeteil 11 ist ebenfalls eine Fördereinrichtung, beispielsweise eine Rollenbahn oder ein Kettenförderer, installiert.

Der Transport einer Ware 4 von der X- zur A-Seite wird in den Fig. 3a-3g gezeigt.

Die Palette 3 mit der Ware 4 wird vom Bahnabschnitt 1' auf die Übergabeeinrichtung 9 gebracht und hat nun die in der Fig. 3b gezeigte Position erreicht.

Nach Erreichen dieser Position wird die Ware 4 mittels des Verschiebeteils 11 in die in der Fig. 3c gezeigte Position gebracht. Anschließend wird die Ware 4 in die in der Fig. 3d gezeigte Position gebracht und der Verschiebeteil 11 fährt zurück in die in der Fig. 3e gezeigte Ausgangsposition, sodaß der Verkehrsweg 7 wieder frei ist und, wie in der Fig. 3f gezeigt, die Durchfahrt eines Transportwagens 8 möglich ist. Ebenso kann ein Arbeitsplatz 12 (Fig. 3g) wieder besetzt werden.

Durch das kombinierte Zusammenwirken der Übergabeeinrichtungen 9 und der Transportwägen 8 ist es möglich, die Förderbahnen 1 zu kombinieren und dadurch sehr große Förder- und Spielleistungen zu erzielen.

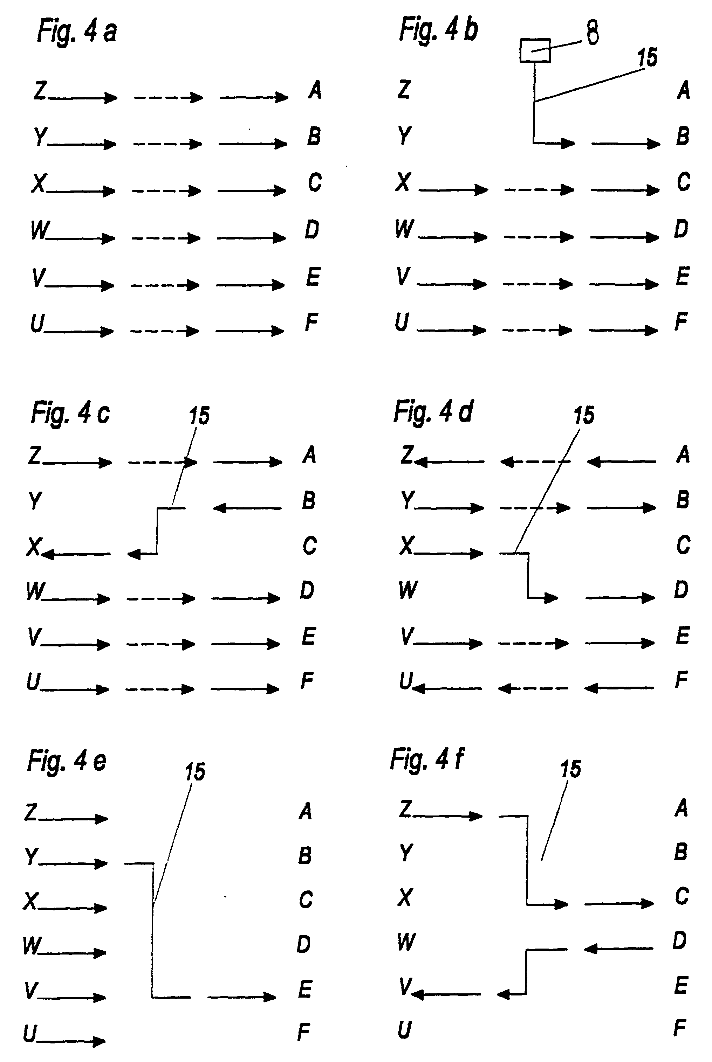

In den Fig. 4a-4f sind verschiedene Transportwege 15 eingezeichnet.

Beispielsweise ist es möglich, daß jeweils von einer U- bis Z-Seite der Förderbahnen 1 auf die jeweils gegenüberliegende A- bis F-Seite transportiert wird. Dies ist in Fig. 4a gezeigt.

Die Fig. 4b zeigt ein Beispiel, wie eine Ware 4 aus einem anderen Bereich mittels eines Transportwagens 8 zu der mit Y-B gekennzeichneten Förderbahn 1 gebracht wird. Gleichzeitig kann Ware 4 von den XWVU-Seiten der Förderbahnen 1 auf die CDEF-Seiten transportiert werden.

Im Ausführungsbeispiel nach der Fig. 4c wird Ware, die jeweils mittels der Übergabevorrichtungen 9 von Z nach A, von W nach D, von V nach E und von U nach F transportiert, während Ware von B nach X oder umgekehrt mittels eines Transportwagens 8 transportiert wird.

In der Fig. 4d wird zwischen Z und A, Y und B, V und E, U und F Ware mittels der Übergabevorrichtungen 9 transportiert und mittels eines Transportwagens 8 von X nach D und umgekehrt.

Die Fig. 4e und f zeigen weitere schematische Darstellungen möglicher Transportwägen 8.

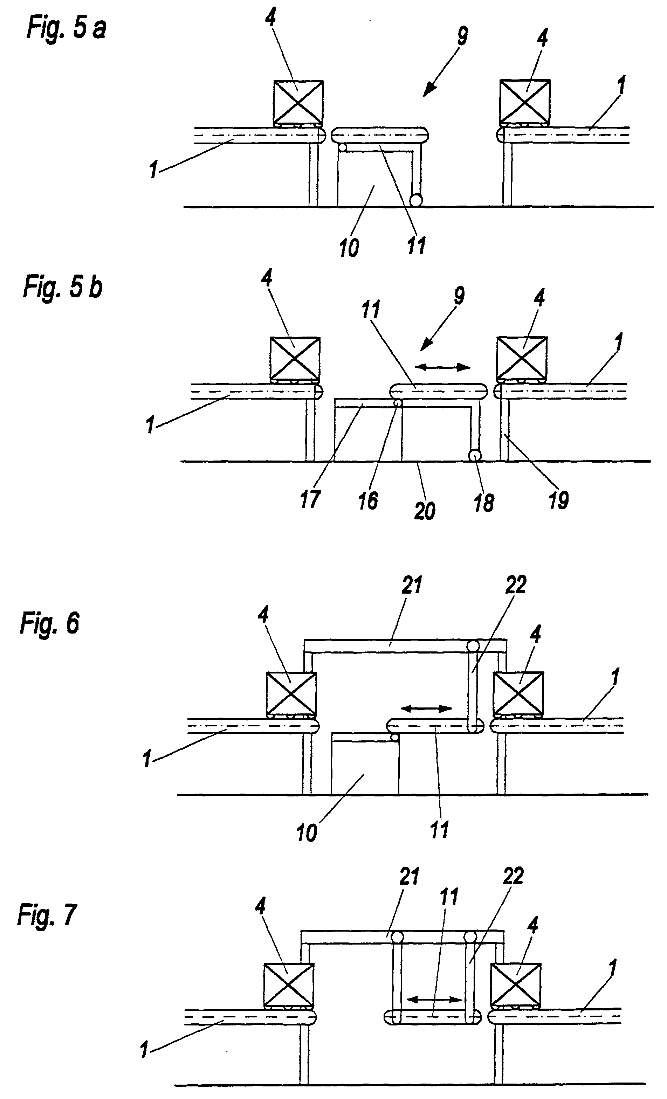

Im Ausführungsbeispiel nach den Fig. 5a und 5b besteht die Übergabevorrichtung 9 aus der Stützkonstruktion 10 und dem Verschiebeteil 11, wobei der Verschiebeteil 11 einerseits über Rollen 16 unmittelbar in Schienen 17 der Stützkonstruktion 10 abgestützt ist und andererseits über Rollen 18 und mindestens einen Fußteil 19 am Boden 20 des Fahrweges 7.

In den Ausführungsbeispielen nach den Fig. 6 bis 9 ist der Verschiebeteil 11 jeweils in oberhalb des Verschiebeteiles 11 angeordneten Schienen 21 eingehängt, und zwar über Haltelaschen 22.

Im Ausführungsbeispiel nach der Fig. 6 stützt sich der Verschiebeteil 11 einerseits an der Stützkonstruktion 10 und andererseits über die Haltelasche 22 an der Schiene 21 ab.

In den Ausführungsbeispielen nach den Fig. 7 und 9 ist der Verschiebeteil 11 ausschließlich in den Schienen 21 geführt.

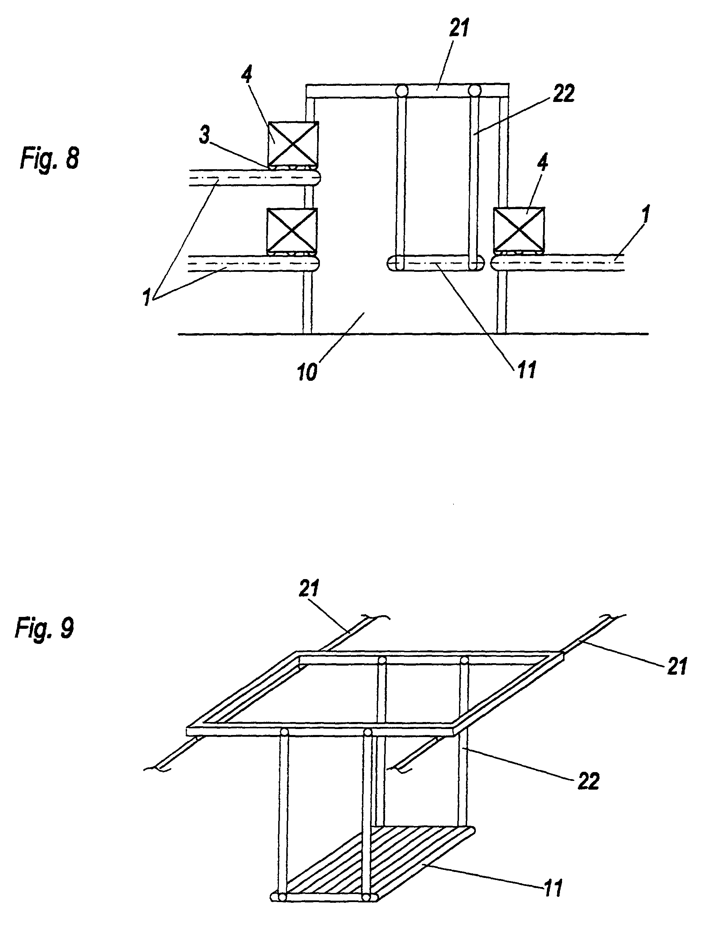

Die Haltelaschen 22 können dabei in der Länge verstellbar sein, sodaß, wie in der Fig. 8 gezeigt, Ware 4 von übereinander angeordneten Förderbahnen 1 abgenommen bzw. an diese übergeben werden kann.

## Patentansprüche

1. Transporteinrichtung, insbesondere innerbetriebliche Transporteinrichtung mit mehreren Förderbahnen (1), beispielsweise in der Form von Rollenbahnen oder Kettenförderern, die mindestens eine Unterbrechung aufweisen, die die jeweilige Förderbahn in zwei Bahnabschnitte (1') trennt und die die Durchfahrt eines Transportwagens (8) gestatten, **dadurch gekennzeichnet, daß** bei mindestens einer Förderbahn vorzugsweise bei allen Förderbahnen eine stationäre Übergabevorrichtung (9) vorgesehen ist, die wahlweise den Warentransport von einem Bahnabschnitt (1') einer Förderbahn (1) direkt zum zweiten Bahnabschnitt (1') dieser Förderbahn (1) ermöglicht.

2. Transporteinrichtung nach Anspruch 1, **dadurch gekennzeichnet, daß** die Übergabevorrichtung (9) einen horizontalen verfahrbaren Verschiebeteil (11) umfaßt.

3. Transporteinrichtung nach Anspruch 2, **dadurch gekennzeichnet, daß** der Verschiebeteil (11) in der Förderrichtung der Förderbahnen (1) verfahrbar ist.

4. Transporteinrichtung nach Anspruch 2 oder 3, **dadurch gekennzeichnet, daß** der Verschiebeteil (11) als Ausleger ausgebildet ist.

5. Transporteinrichtung nach einem der Ansprüche 2 bis 4, **dadurch gekennzeichnet, daß** der Verschiebeteil (11) auf einer Stützkonstruktion (10) lagert, die vor dem Ende eines Bahnabschnittes (1') angeordnet ist.

6. Transporteinrichtung nach einem der Ansprüche 1 bis 5, **dadurch gekennzeichnet, daß** mittels der Übergabevorrichtung (9) ein Abstand zwischen den Bahnabschnitten (1') einer Förderbahn (1) überbrückbar ist, der die Durchfahrt eines Transportwagens (8) ermöglicht.

7. Transporteinrichtung nach einem der Ansprüche 2 bis 6, **dadurch gekennzeichnet, daß** die Stützkonstruktion (10) sockelartig ausgeführt ist.

8. Transporteinrichtung nach Anspruch 7, **dadurch gekennzeichnet, daß** der Verschiebeteil (11) einerseits auf der Stützkonstruktion (10), andererseits über mindestens einen Fußteil (19) am Boden (20) zwischen den Bahnabschnitten (1') verfahrbar abgestützt ist.

9. Transporteinrichtung nach einem der Ansprüche 1 bis 6, **dadurch gekennzeichnet, daß** der Verschiebeteil (11) über Haltelaschen (22) od.dgl. in eine oberhalb des Verschiebeteiles (11) angeordnete Schiene (21) eingehängt ist.

10. Transporteinrichtung nach den Ansprüchen 7 und 9, **dadurch gekennzeichnet, daß** der Verschiebeteil (11) einerseits an der Stützkonstruktion (10) und andererseits über Haltelaschen (22) od.dgl. an den oberhalb des Verschiebeteiles (11) befindlichen Schienen (21) verfahrbar abgestützt ist.

11. Transporteinrichtung nach Anspruch 9 oder 10, **dadurch gekennzeichnet, daß** die Länge der Haltelaschen (22) verstellbar ist.

## Claims

1. A transport arrangement, in particular an in-house transport arrangement comprising a plurality of conveyor paths (1), for example in the form of roller paths or chain conveyors, which have at least one interruption separating the respective conveyor path into two path portions (1'), and which permit a transport cart (8) to pass therethrough, **characterised in that** in the case of at least one conveyor path and preferably in the case of all conveyor paths there is provided a stationary transfer apparatus (9) which selectively permits article transportation from a path portion (1') of a conveyor path (1) directly to the second path portion (1') of said conveyor path (1).

2. A transport arrangement according to claim 1 **characterised in that** the transfer apparatus (9) includes a horizontally movable displacement member (11).

3. A transport arrangement according to claim 2 **characterised in that** the displacement member (11) is movable in the conveyor direction of the conveyor paths (1).

4. A transport arrangement according to claim 2 or claim 3 **characterised in that** the displacement member (11) is in the form of an arm.

5. A transport arrangement according to one of claims 2 to 4 **characterised in that** the displacement member (11) is carried on a support structure (10) which is arranged in front of the end of a path portion (1').

6. A transport arrangement according to one of claims 1 to 5 **characterised in that** a space between the path portions (1') of a conveyor path (1), which permits a transport cart (8) to pass therethrough, can be bridged by means of the transfer apparatus (9).

7. A transport arrangement according to one of claims 2 to 6 **characterised in that** the support structure (10) is of a base-like configuration.

8. A transport arrangement according to claim 7 **characterised in that** the displacement member (11) is supported movably on the one hand on the support structure (10) and on the other hand by way of at least one foot portion (19) on the ground (20) between the path portions (1').

9. A transport arrangement according to one of claims 1 to 6 **characterised in that** the displacement member (11) is suspended by way of holding bars (22) or the like in a rail (21) arranged above the displacement member (11).

10. A transport arrangement according to claims 7 and 9 **characterised in that** the displacement member (11) is supported movably on the one hand at the support structure (10) and on the other hand by way of holding bars (22) or the like at the rails (21) disposed above the displacement member (11).

11. A transport arrangement according to claim 9 or claim 10 **characterised in that** the length of the holding bars (22) is adjustable.

## Revendications

1. Dispositif de transport, en particulier dispositif de transport interne comportant plusieurs voies de transport (1), par exemple sous la forme de transporteurs à rouleaux ou à chaîne, pourvues d'au moins une interruption qui divise chaque voie de transport en deux sections de bande (1') et qui permet le passage d'un chariot transporteur (8), **caractérisé en ce que** pour au moins une voie de transport, de préférence pour toutes les voies de transport, il est prévu un dispositif de transfert fixe (9) qui permet sélectivement de faire passer des produits directement d'une section (1') d'une voie de transport (1) à la seconde section (1') de celle-ci.

2. Dispositif de transport selon la revendication 1, **caractérisé en ce que** le dispositif de transfert (9) comprend une partie de manoeuvre mobile horizontale (11).

3. Dispositif de transport selon la revendication 2, **caractérisé en ce que** la partie de manoeuvre (11) est mobile dans le sens de transport des voies de transport (1) .

4. Dispositif de transport selon la revendication 2 ou 3, **caractérisé en ce que** la partie de manoeuvre (11) est conçue comme un bras.

5. Dispositif de transport selon l'une des revendications 2 à 4, **caractérisé en ce que** la partie de manoeuvre (11) est en appui sur une construction de support (10) qui est disposée devant l'extrémité d'une section de voie (1').

6. Dispositif de transport selon l'une des revendications 1 à 5, **caractérisé en ce que** grâce au dispositif de transfert (9), on couvre une distance entre les sections (1') d'une bande de transport (1) qui permet le passage d'un chariot de transport (8).

7. Dispositif de transport selon l'une des revendications 2 à 6, **caractérisé en ce que** la construction de support (10) est réalisée à la manière d'un socle.

8. Dispositif de transport selon la revendication 7, **caractérisé en ce que** la partie de manoeuvre (11) est supportée, mobile entre les sections de voie (1'), d'une part sur la construction de support (10) et d'autre part sur le sol (20), par l'intermédiaire d'au moins un pied (19).

9. Dispositif de transport selon l'une des revendications 1 à 6, **caractérisé en ce que** la partie de manoeuvre (11) est suspendue par l'intermédiaire de barres de fixation (22) ou d'éléments similaires dans un rail (21) disposé au-dessus de la partie de manoeuvre (11).

10. Dispositif de transport selon les revendications 7 et 9, **caractérisé en ce que** la partie de manoeuvre (11) est supportée, mobile, d'une part sur la construction de support (10) et d'autre part sur des rails (21) qui se trouvent au-dessus de ladite partie de manoeuvre (11), par l'intermédiaire de barres de fixation (22) ou d'éléments similaires.

11. Dispositif de transport selon la revendication 9 ou 10, **caractérisé en ce que** la longueur des barres de fixation (22) est réglable.
